# EUROPEAN PATENT SPECIFICATION

(11) **EP 1 949 650 B1**
(45) Date of publication and mention of the grant of the patent: **30.07.2014**
(21) Application number: 05857399.9
(22) Date of filing: 14.11.2005
(51) Int. Cl.: H04L 29/08

(54) **APPARATUS AND METHOD FOR COMMUNICATING WITH A COMPONENT OF AN AUTOMATION SYSTEM**
VORRICHTUNG UND VERFAHREN ZUM KOMMUNIZIEREN MIT EINER KOMPONENTE EINES AUTOMATISIERUNGSSYSTEMS
APPAREIL ET PROCÉDÉ POUR COMMUNIQUER AVEC UN COMPOSANT D'UN SYSTÈME D'AUTOMATISATION

(43) Date of publication of application: 30.07.2008
(73) Proprietor: Siemens Aktiengesellschaft, 80333 München (DE)
(72) Inventor: KASSOU, Ahmad-Ramez Madjed, St.Petersburg, 193318 (RU); KRUCHININ, Mikhail Leonidovich, St.Petersburg, 196158 (RU)
(86) International application number: PCT/RU2005/000560
(87) International publication number: WO 2007/055613

(56) References cited:
- WO-A-99/46746
- US-A1- 2003 204 560

## Description

The invention relates to an apparatus and a method for a component of an automation system to communicate with a data processing device, there being provision for the data processing device to be able to use a web browser to access the component.

In automation engineering, Internet technologies such as HTTP are increasingly being used for communication with an automation appliance via the Internet or an intranet. Using an Internet browser, such as Microsoft Internet Explorer or Netscape, it is possible to implement remote control or remote configuration of what are known as embedded systems or embedded devices. A prerequisite for this is that the embedded systems or embedded devices have a web server.

It is known practice to store one or more predefined web pages in a memory in an automation appliance such as a programmable logic controller. These web pages can be called by a remote client, for example in order to display process values from an automation process in a predefined format.

Reference is made in this regard to US 2003/204560.

The invention is based on the object of specifying a configuration option for web-based communication between a component of an automation system and a data processing device.

The invention is defined by the appended claims.

In this case and in the entire document, the term automation system is to be understood to mean a system which uses technical means to perform particular operations partly or entirely according to prescribed programs without any human influence. In this context, examples of operations include production processes, assembly processes, transport processes processes for quality control etc. taking place in the industrial environment, in particular.

A fundamental concept of the invention is to store a program on the component of the automation system instead of static web pages which can be displayed using the data processing device. The program is able to generate a web page dynamically only at the request of the data processing device. There are thus no web pages, for example created using HTML, stored on the component of the automation system, but rather an executable program for dynamically generating these web pages. This achieves a very much greater measure of flexibility for generating a screen output.

The second volume of data, which is an HTML page, for example, is generated on the basis of the first volume of data. The first volume of data thus has an influence on the shape of the second volume of data. The first volume of data is thus able to influence a screen output, for example, displayed on the data processing device using the web browser.

Particularly when the data processing device is intended to be able to influence the shape of the second volume of data and hence the screen output generated via the web browser, it is expedient if the first volume of data is transmitted by the data processing device. Alternatively, however, it may also make sense for certain state values of the component of the automation system to influence the shape of the second volume of data. Particularly for this case, it is therefore expedient if the first volume of data is transmitted by the component of the automation system.

In one advantageous embodiment of the invention, the component of the automation system is a programmable logic controller. For web-based communication with a programmable logic controller (PLC), it has to date merely been known practice to store static HTML pages or pages created in another markup language within the PLC. The opportunities for a user to influence the display of process values are very restricted in the case of such a form of web-based communication. By way of example, if an automation project on the PLC is changed, it is necessary to update the stored static web pages too. To do this, it is necessary to generate new web pages outside of the PLC using a separate tool which is suitable for this purpose and then to load them into the controller. Since changing the automation process and updating the web pages are separate operations, it is not always guaranteed that web pages and PLC project are consistent with one another.

By contrast, the advantageous refinement of the invention allows the second volume of data to be used to influence the output of the web pages without storing new HTML pages directly in the controller in order to do so. Since no kind of static HTML pages or other web pages are stored on the controller, they also do not need to be changed when the PLC project is changed.

In one advantageous embodiment of the invention, the component of the automation system has a remote connection to the data processing device, particularly via the Internet. This allows a user to use a commercially available PC or laptop to read in and/or alter process values or state values from the component of the automation system from a remote location using a web browser.

In many cases, it is desirable for the options for accessing and the type of display of process values from an automation process and state values from an automation component to be shaped on a user-dependent basis. In line with a further advantageous refinement of the invention, such user-dependent display of process values or state values from an automation component can be made possible by virtue of the first volume of data being provided for the purpose of identifying a user profile. In such a type of implementation, the user profile is detected by the detection means and is taken into account by the processing means when executing the program such that the second volume of data is generated on a user-specific basis. This allows various solutions to be implemented for identifying and authorizing a user. Using the first volume of data, it is possible to set up various levels of data access to the component of the automation system, in particular.

Alternatively or else in addition to what has been described above, a further advantageous embodiment of the invention allows the first volume of data to be provided for the purpose of identifying an output appliance provided for the purpose of displaying the second volume of data. Examples of suitable output appliances are commercially available screens for a PC, for a laptop or else a PDA. Output on a mobile phone display in the case of wireless access to the component of the automation system is also conceivable. The output formats of these appliances are very different. For this reason, it makes sense for the second volume of data, which is intended to be displayed using a web browser installed on these output appliances, also to be produced on the basis of the formats of these output appliances.

In addition, in line with a further advantageous embodiment of the invention, the first volume of data can be provided for the purpose of identifying a language provided when the second volume of data is displayed. This provides a user with the opportunity to define an appropriate first volume of data in order to influence the screen output in his web browser when the second volume of data is displayed.

Particularly when a piece of control software stored on the component of the automation system is updated, the program for generating the second volume of data should also be updated. To this end, it is advantageous if the first volume of data is provided for the purpose of updating the program. This may also be an interface which allows a completely new program to be loaded onto the component of the automation system in order to match the communication interface to the new project running on the automation component or to the new control software in this way.

In one advantageous embodiment of the invention, the apparatus has further storage means for storing an output format, associated with the first volume of data, for displaying the second volume of data. By way of example, the further storage means already store, for each regular user of the apparatus, an output format which can be loaded when the respective user is recognized, particularly using the first volume of data.

In one advantageous embodiment of the program, the program is a complied Java Servlet. Particularly when the component of the automation system has little resources for dynamically generating web pages, it may be advantageous to generate such a Java Servlet outside of the component of the automations system in an actual engineering phase. By way of example, the Java Servlet is generated beforehand on the data processing device on which a parser, generator and compiler required for this purpose are installed. In particular, the data processing device generates the Java Servlet on the basis of a JSP page and then loads it into the component of the automation system. The Java servlet then needs to be executed in the course of operation using just the processing means, in order to generate the second volume of data, particularly in the form of an HTML page, dynamically in this way at the time of execution.

In a further advantageous refinement of the invention, the first volume of data comprises an XSLT Script and the program is in the form of an XSLT processor. In such an embodiment, the user, for example, transmits the XSLT Script to the component. The XSLT processor uses the XSLT Script to generate the second volume of data, particularly in the form of an HTML page, from raw data available in XML, for example.

The invention is described in more detail and explained below using the exemplary embodiments which are illustrated in the figures, in which:
- FIGURE 1: shows a schematic illustration of a method for a component of an automation system to communicate with a data processing device, and
- FIGURE 2: shows a system for a data processing device to communicate with a component of an automation system.

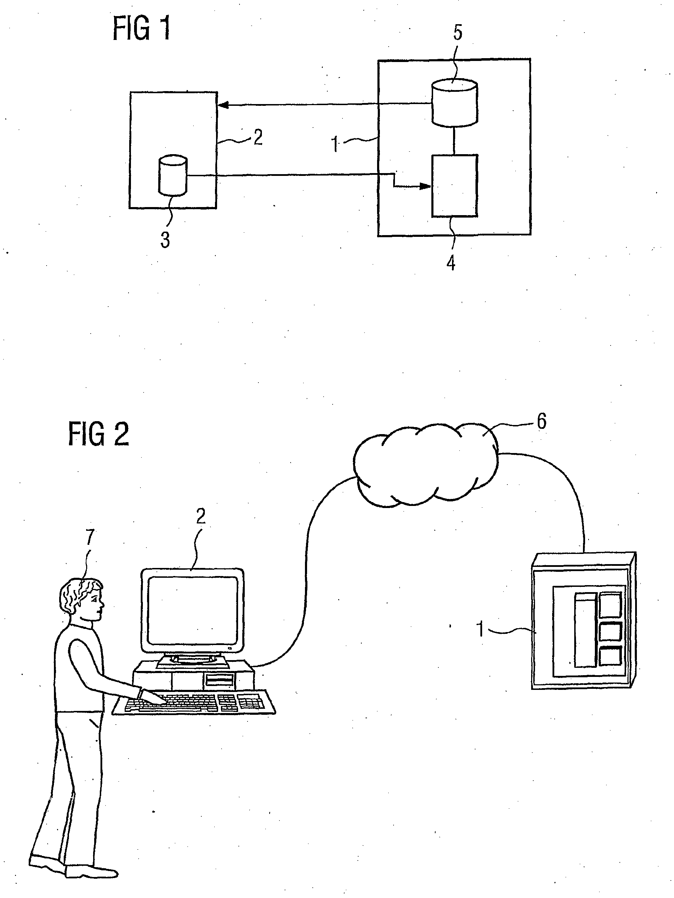

FIGURE 1 shows a schematic illustration of a method for a component 1 of an automation system to communicate with a data processing device 2. The data processing device 2 has a web browser installed on it which allows a user to read and alter data within the component 1 of the automation system. Before or during such communication, the data processing device 2 transmits a first volume of data 3 to the component 1 of the automation system. A memory in the component 1 of the automation system stores a program 4 which is suitable for dynamically generating web pages. Through execution of the program 4 taking into account the first volume of data 3, a second volume of data 5 is produced which can be displayed using the web browser of the data processing device 2. The first volume of data 3 is thus able to influence the generation of the second volume of data 5 using the program 4.

The first volume of data 3 can be used, by way of example, to influence the display of the second volume of data 5 using the web browser. By way of example, the first volume of data 3 is information which defines the output format of an output appliance in the data processing device 2. Using this output format, the second volume of data 5 is shaped such that it has an optimum format for the output appliance. In addition, the first volume of data 3 may be data which define a user profile for a user. On the basis of this user profile, the program can provide various access options for the user. By way of example, it can generate the.second volume of data 5 such that the web browser is used to permit particular read and write rights to the component 1 of the automation system on a user-dependent basis. In addition, the first volume of data 3 can be used to define a language in which the web pages appear on the data processing device 2. Similarly, the first volume of data 3 may be a program update which is used to update the program 4. This is required, for example, when a piece of control software running on the component 1 of the automation system is updated and an operating and observation interface for the user needs to be adapted accordingly.

Web pages can also be generated dynamically very easily using an XSLT transformation. In this case, the program 4 is in the form of an XSLT processor. The volume of data to be displayed, which involves process values or instructions for a user, for example, is available in the XML data format. The XSLT transformation can be used to convert the XML data into HTML data. The shape of the resultant HTML pages is stipulated by an XSLT Script which is produced by a user in the form of the first volume of data 3 and is transmitted to the component 1. The XSLT processor 4 then generates the second volume of data 5 from the XML data on the basis of the XSLT Script 3, said second volume of data being the HTML output data. These are finally transmitted to the data processing unit 2, where they can be displayed using a web browser.

FIGURE 2 shows a system for a data processing device 2 to communicate with a component 1 of an automation system via the Internet. In this example, the component 1 of the automation system is intended to be a programmable logic controller 1. The program for dynamically generating web pages which has already been described above with reference to FIGURE 1 is installed on the programmable logic controlled 1 in a memory. The programmable logic controller 1 is connected to the Internet 6. Alternatively, the programmable logic controller may be connected to a company-internal intranet. Likewise connected to the Internet 6 is a data processing device 2, which is in the form of a PC, for example, and is operated by a user 7. Using the PC 2, the user 7 is now able to access the programmable logic controller 1 via the Internet 6. For this purpose, a web browser is installed on the PC 2. Since, instead of static HTML pages or pages created in another markup language, the programmable logic controller 1 has a program installed on it which is able to produce such screen outputs which can be displayed using a web browser only at the time of execution, the user 7 is able to influence this communication interface. He does this by transmitting the first volume of data 3, already explained with reference to FIGURE 1, from his PC 2 to the programmable logic controller 1 via the Internet 6. The user 7 is thus able to use his web browser to have an active or passive influence on the shaping of the information when control data are displayed.

Alternatively, the first volume of data 3 can be generated within the programmable logic controller. By way of example, the first volume of data 3 contains state values from the PLC and/or from an automation process controlled by it. Such state values can influence the second volume of data and hence the display of the web browser.

It goes without saying that the first volume of data may also contain data transmitted both by the data processing device 2 and by the component 1 of the automation appliance and hence allow the second volume of data 5 to be influenced both by the data processing device and by the component 1 of the automation system.

## Claims

1. A component (1) of an automation system comprising an apparatus to communicate with a data processing device (2), where the apparatus comprises:
- detection means for detecting a first volume of data (3),
- storage means for storing a program (4) which is suitable for dynamically generating a second volume of data (5) being a web page, which is produced in a markup language and is displayable using a web browser,
- processing means for dynamically generating the second volume of data (5) at the request of the data processing device by executing the program (4), the processing means being in a form such that the second volume of data (5) is generated on the basis of the first volume of data (3), whereas the dynamic generation of the web page is performed without using web pages stored on the component (1), and
- transmission means for transmitting the second volume of data (5) to the data processing device (2),
the apparatus being part of the component (1) of the automation system, and
where the first volume of data (3) is provided for the purpose of identifying an output format of an output appliance provided for the purpose of displaying the second volume of data (5).

2. The component as claimed in claim 1,
Where the apparatus comprises means receiving the first volume of data (3) transmitted by the data processing device (2) to the apparatus.

3. The component as claimed in claim 1,
where the apparatus comprises means receiving the first volume of data (3) transmitted by the component (1) of the automation system to the apparatus.

4. The component as claimed in one of the preceding claims, where the component (1) of the automation system is a programmable logic controller.

5. The component as claimed in one of the preceding claims, comprising means for setting up and maintaining a remote connection to the data processing device (2).

6. The component as claimed in one of the preceding claims, where the first volume of data (3) is provided for the purpose of identifying a user profile.

7. The component as claimed in one of the preceding claims, where the first volume of data (3) is provided for the purpose of identifying a language provided when the second volume of data (5) is displayed.

8. The component as claimed in one of the preceding claims, where the apparatus has further storage means for storing an output format, associated with the first volume of data (3), for displaying the second volume of data (5).

9. The component as claimed in one of the preceding claims, where the program (4) is a compiled Java Servlet.

10. The component as claimed in one of the preceding claims, where the first volume of data (3) comprises an XSLT Script and the program (4) is in the form of an XSLT processor.

11. A method for a component (1) of an automation system to communicate with a data processing device (2), in which an apparatus, comprising a program (4) which is suitable for dynamically generating a second volume of data (5) which is produced in a markup language and is displayable by means of a web browser, is used to perform the following method steps:
- detecting a first volume of data (3) which is transmitted by the data processing device (2),
- dynamically generating a second volume of data (5) in a markup language being a web page at the request of the data processing device by executing the program (4) on the basis of the first volume of data (3), whereas the dynamic generation of the web page is performed without using web pages stored on the component (1), and
- transmitting the second volume of data (5) to the data processing device (2),
the apparatus being part of the component (1) of the automation system, and
where the first volume of data (3) is used to identify an output format of an output appliance provided for the purpose of displaying the second volume of data (5).

12. The method as claimed in claim 11,
where the first volume of data (3) is transmitted by the data processing device (2).

13. The method as claimed in claim 11,
where the first volume of data (3) is transmitted by the component (1) of the automation system.

14. The method as claimed in one of claims 11 to 13,
where the component (1) of the automation system is a programmable logic controller.

15. The method as claimed in one of claims 11 to 14,
where a remote connection is set up between the component (1) of the automation system and the data processing device (2).

16. The method as claimed in one of claims 11 to 15,
where the first volume of data (3) identifies a user profile.

17. The method as claimed in one of claims 11 to 16,
where the first volume of data (3) identifies a language provided when the second volume of data (5) is displayed.

18. The method as claimed in one of claims 11 to 17,
where a further first volume of data (3) is used to update the program (4).

19. The method as claimed in one of claims 11 to 18,
where the apparatus stores an output format, associated with the first volume of data (3), for displaying the second volume of data (5).

20. The method as claimed in one of claims 11 to 19,
where a compiled Java Servlet is used as the program (4).

21. The method as claimed in one of claims 11 to 20,
where the first volume of data (3) comprises an XSLT Script and an XSLT processor is used as the program (4).

## Patentansprüche

1. Komponente (1) eines Automatisierungssystems mit einer Vorrichtung zur Kommunikation mit einer Datenverarbeitungseinrichtung (2), wobei die Vorrichtung umfasst:
- Erfassungsmittel zur Erfassung einer ersten Datenmenge (3),
- Speichermittel zum Speichern eines Programms (4), das zur dynamischen Erzeugung von einer in einer Auszeichnungssprache erstellten, mittels eines Webbrowsers darstellbaren zweiten Datenmenge (5), die eine Webseite ist, geeignet ist,
- Verarbeitungsmittel zur dynamischen Erzeugung der zweiten Datenmenge (5) auf Anforderung der Datenverarbeitungseinrichtung durch Ausführen des Programms (4), wobei die Verarbeitungsmittel derart ausgeführt sind, dass die zweite Datenmenge (5) abhängig von der ersten Datenmenge (3) erzeugt wird, wobei die dynamische Erzeugung der Webseite ohne Verwendung von in der Komponente (1) gespeicherten Webseiten durchgeführt wird, und
- Sendemittel zum Senden der zweiten Datenmenge (5) an die Datenverarbeitungseinrichtung (2),
wobei die Vorrichtung Teil der Komponente (1) des Automatisierungssystems ist, und
wobei die erste Datenmenge (3) zur Kennzeichnung eines Ausgabeformats eines zur Darstellung der zweiten Datenmenge (5) vorgesehenen Ausgabegeräts vorgesehen ist.

2. Komponente nach Anspruch 1,
wobei die Vorrichtung Mittel zum Empfang der von der Datenverarbeitungseinrichtung (2) zu der Vorrichtung gesendeten ersten Datenmenge (3) umfasst.

3. Komponente nach Anspruch 1,
wobei die Vorrichtung Mittel zum Empfang der von der Komponente (1) des Automatisierungssystems zu der Vorrichtung gesendeten ersten Datenmenge (3) umfasst.

4. Komponente nach einem der vorhergehenden Ansprüche, wobei die Komponente (1) des Automatisierungssystems eine speicherprogrammierbare Steuerung ist.

5. Komponente nach einem der vorhergehenden Ansprüche, umfassend Mittel zum Aufbauen und Erhalten einer Remoteverbindung zur Datenverarbeitungseinrichtung (2).

6. Komponente nach einem der vorhergehenden Ansprüche,
wobei die erste Datenmenge (3) zur Kennzeichnung eines Benutzerprofils vorgesehen ist.

7. Komponente nach einem der vorhergehenden Ansprüche,
wobei die erste Datenmenge (3) zur Kennzeichnung einer bei der Darstellung der zweiten Datenmenge (5) vorgesehenen Sprache vorgesehen ist.

8. Komponente nach einem der vorhergehenden Ansprüche, wobei die Vorrichtung weitere Speichermittel zum Speichern eines der ersten Datenmenge (3) zugeordneten Ausgabeformats für die Darstellung der zweiten Datenmenge (5) aufweist.

9. Vorrichtung nach einem der vorhergehenden Ansprüche, wobei das Programm (4) ein kompiliertes Java Servlet ist.

10. Komponente nach einem der vorhergehenden Ansprüche, wobei die erste Datenmenge (3) ein XSLT Script umfasst und das Programm (4) als XSLT Prozessor ausgeführt ist.

11. Verfahren zur Kommunikation einer Komponente (1) eines Automatisierungssystems mit einer Datenverarbeitungseinrichtung (2), bei dem mit einer Vorrichtung, umfassend ein Programm (4), das zur dynamischen Erzeugung von einer in einer Auszeichnungssprache erstellten, mittels eines Webbrowsers darstellbaren zweiten Datenmenge (5) geeignet ist,
- eine erste Datenmenge (3) erfasst wird, die von der Datenverarbeitungseinrichtung (2) gesendet wird,
- eine zweite Datenmenge (5), die eine Webseite ist, in einer Auszeichnungssprache dynamisch erstellt wird auf Anforderung der Datenverarbeitungseinrichtung durch Ausführen des Programms (4) abhängig von der ersten Datenmenge (3), wobei die dynamische Erzeugung der Webseite ohne Verwendung von in der Komponente (1) gespeicherten Webseiten durchgeführt wird, und
- die zweite Datenmenge (5) an die Datenverarbeitungseinrichtung (2) gesendet wird,
wobei die Vorrichtung Teil der Komponente (1) des Automatisierungssystems ist, und
wobei die erste Datenmenge (3) zur Kennzeichnung eines Ausgabeformats eines zur Darstellung der zweiten Datenmenge (5) vorgesehenen Ausgabegeräts vorgesehen ist.

12. Verfahren nach Anspruch 11,
wobei die erste Datenmenge (3) von der Datenverarbeitungseinrichtung (2) gesendet wird.

13. Verfahren nach Anspruch 11,
wobei die erste Datenmenge (3) von der Komponente (1) des Automatisierungssystems gesendet wird.

14. Verfahren nach einem der Ansprüche 11 bis 13,
wobei die Komponente (1) des Automatisierungssystems eine speicherprogrammierbare Steuerung ist.

15. Verfahren nach einem der Ansprüche 11 bis 14,
wobei eine Remoteverbindung zwischen der Komponente (1) des Automatisierungssystems und der Datenverarbeitungseinrichtung (2) aufgebaut wird.

16. Verfahren nach einem der Ansprüche 11 bis 15,
wobei mit der ersten Datenmenge (3) ein Benutzerprofil gekennzeichnet wird.

17. Verfahren nach einem der Ansprüche 11 bis 16,
wobei mit der ersten Datenmenge (3) eine bei der Darstellung der zweiten Datenmenge (5) vorgesehene Sprache gekennzeichnet wird.

18. Verfahren nach einem der Ansprüche 11 bis 17,
wobei eine weitere erste Datenmenge (3) zum Aktualisieren des Programms (4) verwendet wird.

19. Verfahren nach einem der Ansprüche 11 bis 18, wobei in der Vorrichtung ein der ersten Datenmenge (3) zugeordnetes Ausgabeformat für die Darstellung der zweiten Datenmenge (5) gespeichert wird.

20. Verfahren nach einem der Ansprüche 11 bis 19, wobei ein kompiliertes Java Servlet als Programm (4) eingesetzt wird.

21. Verfahren nach einem der Ansprüche 11 bis 20,
wobei die erste Datenmenge (3) ein XSLT Script umfasst und ein XSLT Prozessor als Programm (4) eingesetzt wird.

## Revendications

1. Un composant (1) d'un système d'automatisation comprenant un appareil de communication avec un dispositif de traitement de données (2), l'appareil comprenant :
- un moyen de détection destiné à détecter un premier volume de données (3),
- un moyen à mémoire destiné à conserver en mémoire un programme (4) qui est adapté à la génération dynamique d'un deuxième volume de données (5) qui est une page web, qui est produite dans un langage de balisage et est affichable au moyen d'un navigateur web,
- un moyen de traitement pour la génération dynamique du deuxième volume de données (5) à la demande du dispositif de traitement de données par l'exécution du programme (4), le moyen de traitement étant dans une forme telle que le deuxième volume de données (5) est généré en fonction du premier volume de données (3), tandis que la génération dynamique de la page web est exécutée sans l'utilisation de pages web conservées en mémoire sur le composant (1), et
- un moyen de transmission destiné à la transmission du deuxième volume de données (5) au dispositif de traitement de données (2),
l'appareil étant une partie du composant (1) du système d'automatisation, et
le premier volume de données (3) étant fourni dans le but d'identifier un format de sortie d'un appareil de sortie fourni dans le but d'afficher le deuxième volume de données (5).

2. Le composant selon la revendication 1,
dans lequel l'appareil comprend un moyen de réception du premier volume de données (3) transmis par le dispositif de traitement de données (2) à l'appareil.

3. Le composant selon la revendication 1,
dans lequel l'appareil comprend un moyen de réception du premier volume de données (3) transmis par le composant (1) du système d'automatisation à l'appareil.

4. Le composant selon l'une quelconque des revendications précédentes, dans lequel le composant (1) du système d'automatisation est un dispositif de commande logique programmable.

5. Le composant selon l'une quelconque des revendications précédentes, comprenant un moyen d'établissement et d'entretien d'une connexion distante au dispositif de traitement de données (2).

6. Le composant selon l'une quelconque des revendications précédentes, dans lequel le premier volume de données (3) est fourni dans le but d'identifier un profil d'utilisateur.

7. Le composant selon l'une quelconque des revendications précédentes, dans lequel le premier volume de données (3) est fourni dans le but d'identifier un langage fourni lorsque le deuxième volume de données (5) est affiché.

8. Le composant selon l'une quelconque des revendications précédentes, dans lequel l'appareil possède un autre moyen à mémoire destiné à conserver en mémoire un format de sortie, associé au premier volume de données (3), pour l'affichage du deuxième volume de données (5).

9. Le composant selon l'une quelconque des revendications précédentes, dans lequel le programme (4) est un miniserveur Java compilé.

10. Le composant selon l'une quelconque des revendications précédentes, dans lequel le premier volume de données (3) comprend un script XSLT et le programme (4) est sous la forme d'un processeur XSLT.

11. Un procédé pour un composant (1) d'un système d'automatisation de communication avec un dispositif de traitement de données (2), dans lequel un appareil, comprenant un programme (4) qui est adapté à la génération dynamique d'un deuxième volume de données (5) qui est produit dans un langage de balisage et est affichable au moyen d'un navigateur web, est utilisé pour exécuter les étapes de procédé suivantes :
- la détection d'un premier volume de données (3) qui est transmis par le dispositif de traitement de données (2),
- la génération dynamique d'un deuxième volume de données (5) dans un langage de balisage qui est une page web à la demande du dispositif de traitement de données par l'exécution du programme (4) en fonction du premier volume de données (3), tandis que la génération dynamique de la page web est exécutée sans l'utilisation de pages web conservées en mémoire sur le composant (1), et
- la transmission du deuxième volume de données (5) au dispositif de traitement de données (2),
l'appareil étant une partie du composant (1) du système d'automatisation, et
le premier volume de données (3) étant utilisé pour identifier un format de sortie d'un appareil de sortie fourni dans le but d'afficher le deuxième volume de données (5).

12. Le procédé selon la revendication 11,
dans lequel le premier volume de données (3) est transmis par le dispositif de traitement de données (2).

13. Le procédé selon la revendication 11,
dans lequel le premier volume de données (3) est transmis par le composant (1) du système d'automatisation.

14. Le procédé selon l'une quelconque des revendications 11 à 13,
dans lequel le composant (1) du système d'automatisation est un dispositif de commande logique programmable.

15. Le procédé selon l'une quelconque des revendications 11 à 14,
dans lequel une connexion distante est établie entre le composant (1) du système d'automatisation et le dispositif de traitement de données (2).

16. Le procédé selon l'une quelconque des revendications 11 à 15,
dans lequel le premier volume de données (3) identifie un profil d'utilisateur.

17. Le procédé selon l'une quelconque des revendications 11 à 16,
dans lequel le premier volume de données (3) identifie un langage fourni lorsque le deuxième volume de données (5) est affiché.

18. Le procédé selon l'une quelconque des revendications 11 à 17,
dans lequel un autre premier volume de données (3) est utilisé pour actualiser le programme (4).

19. Le procédé selon l'une quelconque des revendications 11 à 18,
dans lequel l'appareil conserve en mémoire un format de sortie, associé au premier volume de données (3), pour l'affichage du deuxième volume de données (5).

20. Le procédé selon l'une quelconque des revendications 11 à 19,
dans lequel un miniserveur Java compilé est utilisé en tant que programme (4).

21. Le procédé selon l'une quelconque des revendications 11 à 20,
dans lequel le premier volume de données (3) comprend un script XSLT et un processeur XSLT est utilisé en tant que programme (4).
